# EUROPÄISCHE PATENTSCHRIFT

(11) **EP 1 723 843 B1**
(45) Veröffentlichungstag und Bekanntmachung des Hinweises auf die Patenterteilung: **19.12.2007**
(21) Anmeldenummer: 06010328.0
(22) Anmeldetag: 19.05.2006
(51) Int. Cl.: A01D 34/535

(54) **Vorrichtung zum Abschneiden und Zerschneiden von insbesondere hoch wachsendem Schnittgut**
Apparatus for cutting and mulching of in particular high grown grass cuttings
Appareil pour couper et broyer en particulier des matières coupées hautes

(30) Priorität: 19.05.2005 DE 102005023012
(43) Veröffentlichungstag der Anmeldung: 22.11.2006
(73) Patentinhaber: ESM ENNEPETALER SCHNEID- UND MÄHTECHNIK GMBH & CO. KG, D-58256 Ennepetal (DE)
(72) Erfinder: Schlasse, Manfred, 58089 Hagen (DE)
(74) Vertreter: Rehberg Hüppe + Partner

(56) Entgegenhaltungen:
- WO-A-91/03926
- DE-U1- 29 806 664
- FR-A- 2 733 115
- GB-A- 842 620
- NL-A- 6 601 022
- NL-A- 6 700 672
- NL-A- 7 500 382

## Beschreibung

Die Erfindung betrifft eine Vorrichtung zum Abschneiden und Zerschneiden von insbesondere hoch wachsendem Schnittgut. Damit wird ein Schlegelmähwerk angesprochen, bei dem typischerweise eine Mehrzahl von Schlegelmessern über die Arbeitsbreite reichend an einer angetriebenen Welle frei beweglich aufgehängt sind, so dass sich die Schlegelmesser bei angetriebener Welle unter Fliehkrafteinwirkung radial zur Achse der Welle ausrichten. Die Achse der Welle kann insbesondere horizontal oder vertikal positioniert sein. Unter Schnittgut wird insbesondere Halmgut von Getreidearten, aber auch hoch wachsendes Gras und sonstige Pflanzen verstanden, die einen im Wesentlichen aufrechten Wuchs aufweisen und bei denen es darauf ankommt, das betreffende Schnittgut nicht nur ein- oder mehrmals abzuschneiden, sondern auch die abgeschnittenen Schnittgutteile weiter zu zerschneiden. Die Vorrichtung lässt sich insbesondere in Verbindung mit Mähdreschern bei der Ernte von Getreide einsetzen, insbesondere dann, wenn die Ähren von dem Halm abgerissen werden und die Halme abgeschnitten und zerkleinert werden müssen, um sie beispielsweise unterpflügen zu können.

### STAND DER TECHNIK

Eine Vorrichtung der angesprochenen Art ist aus der DE 100 39 834 C2 bekannt. Die dort eingesetzten Messer sind frei pendelnd beweglich aufgehängt und werden in einer etwa horizontal zum Boden ausgerichteten Schnittebene um eine etwa vertikal ausgerichtete Welle in Drehrichtung umlaufend angetrieben. Damit ist es möglich, das Schnittgut am Boden abzuschneiden. Die Messer sind zwar nicht in der typischen Art von Schlegelmessern ausgebildet, besitzen jedoch bereits Y-artig abgewinkelte Schenkel, mit denen zusätzlich eine Förderwirkung auf das Schnittgut ausgeübt wird. Die Messer sind an Armen aufgehängt, die über die Welle drehend angetrieben werden. Die Arme erfüllen die Funktion von Messerhaltern. Durch die frei pendelnde Aufhängung der Messer richten sich diese bei angetriebener Welle unter Fliehkrafteinwirkung radial aus, und zwar entsprechend der Anordnung des Schwerpunkts des Messers so, dass die Verbindungslinie zwischen dem Aufhängepunkt des Messers und dem Schwerpunkt des Messers exakt radial zur Achse der Welle ausgerichtet wird. Die Messer sind mit Schneiden versehen, mit denen das Schnittgut geschnitten wird. Aus ihrer durch Fliehkrafteinwirkung radial ausgerichteten Stellung werden die Messer durch die Reaktionskraft am Schnittgut mehr oder weniger ausgelenkt. Durch die Auslenkung baut sich eine Schnittkraft an den Messern auf, die erforderlich ist, das Schnittgut zu schneiden. Die Schnittkraft ist abhängig von dem jeweiligen Schnittgut, dessen Widerstand und der momentanen Schärfe der Schneiden der Messer. Die Schnittkraft stellt während eines Schneidzyklus eine schwankende Größe dar, die je nach dem auftretenden Schneidwiderstand wechselt. Hierdurch bedingt nehmen die Messer beim Schneiden unterschiedliche Winkelstellungen ein, je nach der Höhe des örtlichen Widerstands. Selbst während eines einzelnen Schnittvorgangs an einem Halm ändert sich die Stellung der Schneide zum Halm und damit auch die Schnittbedingungen. Der Flächenanteil des Messers, der mit dem Halm in Kontakt kommt, reibt zu Beginn eines Schnittes zunächst am Halm. Damit tritt eine Reibung auf, die den Leistungsbedarf des Mähwerks erhöht. Durch diese Relativbewegung zwischen Schneide und Halm zu Beginn eines Schnittvorgangs rutschen die Schneiden an dem gebogenen Schnittgut entlang, so dass sich die Messer um die Achse ihrer Aufhängung zurückstellen. Dadurch wiederum vergrößert sich der Anstellwinkel. Wenn der Anstellwinkel hinreichend groß geworden ist, beginnt der eigentliche Schnitt.

Die NL-A-7 500 382 zeigt ein so genanntes Tellermähwerk, bei dem horizontal ausgerichtete Mähteller um vertikale Achsen rotierend angetrieben werden und schwenkbar aufgehängte Messer tragen. Ein solches Tellermähwerk dient dem Abschneiden von Schnittgut, insbesondere Gras, das im Schwad abgelegt wird. Das Tellermähwerk dient nicht dem Zerschneiden von abgeschnittenem Schnittgut. Das Tellermähwerk besitzt beweglich aufgehängte Messer, die sich unter Fliehkrafteinwirkung ausrichten. Die Messer weisen bei einer Ausführungsform eine Masseverteilung mit einer entgegen der Drehrichtung der Welle nach hinten verlagerter Schwerpunktausbildung auf. Die Messer besitzen einen Anschlag und an den Mähtellern sind Gegenanschläge vorgesehen, so dass im Rotationsantrieb ein Kraftspeicher gebildet wird, der zumindest in Schneidposition eine Tangentialkraft zur Verfügung stellt, die der von dem Messer aufzubringenden Schnittkraft gleichgerichtet ist.

Typische Schlegelmesser in Y-Form und unter paarweiser Anordnung sind aus dem Gebrauchsmuster DE 298 06 664 U1 bekannt. In dieser Y-Form beträgt der Winkel zwischen den mit Schneiden versehenen Schenkel der Schlegelmesser etwa 100°. Er kann auch noch größer werden, beispielsweise 120°, ohne dass es zu einer übermäßigen Belastung der Messer und einer damit verbundenen Bruchgefahr kommt. Grundsätzlich bleibt aber die Y-Form erhalten, die aber den Nachteil einer vergleichsweise geringen Arbeitsbreite aufweist. Hierdurch vergrößert sich die Anzahl der Paare von Schlegelmessern, die über die Arbeitsbreite eines Schlegelmähwerks angeordnet werden. Hieraus wiederum resultiert ein erhöhter Leistungsbedarf.

Aus der DE 103 23 829 A1 ist ein Mähdrescher bekannt, bei dem die Ähren über ein erstes Schneidwerk abgeschnitten und einer Dresch- und Reinigungseinrichtung zugeführt werden. Zum Abschneiden und Zerkleinern der Halme ist eine nachgeordnete Häckseleinrichtung oder ein Zusatzschneidwerk vorgesehen. Die Häckseleinrichtung kann vorzugsweise als Schlegelhäcksler ausgebildet sein.

Aus der US 5,272,861 ist eine Vorrichtung zum Schneiden von Schnittgut bekannt, bei der an einer Welle ein Schlegelmesserpaar aufgehängt ist. Es handelt sich in der Regel um gerade ausgebildete Schlegelmesser, zwischen denen eine mit Reibung arbeitende Federanordnung angeordnet ist. Damit befinden sich die Schlegelmesser jedes Schlegelmesserpaars auf Abstand. Die Schlegelmesser sind symmetrisch ausgebildet und besitzen zwei Schneiden, so dass sie jeweils in zwei unterschiedlichen Relativlagen eingesetzt werden können. Die Schlegelmesser als gerade Messer besitzen lediglich radial abstehende Schenkel, die sich bei Fliehkrafteinwirkung ausrichten. Die Ausrichtung wird durch einen Anschlag und einen Gegenanschlag begrenzt, so dass insoweit ein Kraftspeicher gebildet ist, die Schlegelmesser aber andererseits beim Auftreffen von Hindernissen ausweichen können. Mit dem Kraftspeicher wird eine Tangentialkraft zur Verfügung gestellt, die der von den Schlegelmessern aufzubringenden Schnittkraft gleichgerichtet ist. Die beabstandet zueinander angeordneten Schlegelmesser können auch in etwa L-Form aufweisen.

Aus der FR 2 776 953 ist ebenfalls eine Vorrichtung zum Schneiden von Schnittgut bekannt, bei der Schlegelmesser vorgesehen sind, die einzeln aufgehängt und angeordnet sind. Zwischen Messerträger und Messer ist ein Anschlag und ein Gegenanschlag vorgesehen, so dass in Verbindung mit einer Masseverteilung entgegen der Drehrichtung eine nach hinten verlagerte Schwerpunktsausbildung entsteht, so dass auf diese Weise ein Kraftspeicher an jedem einzelnen Schlegelmesser gebildet ist, der beim Schneiden wirksam wird. Das einzelne Schlegelmesser kann dabei auch T-förmig ausgebildet sein. Es handelt sich dabei um ein hammerähnliches Schlegelmesser, welches bekanntlich durch einen Gießvorgang hergestellt wird.

### AUFGABE DER ERFINDUNG

Der Erfindung liegt die Aufgabe zugrunde, eine Vorrichtung der eingangs beschriebenen Art derart weiterzubilden, dass in dem aufgezeigten Zusammenhang ein vergleichsweise geringerer Leistungsbedarf für den Antrieb der Schlegelmesser entsteht. Dies gilt insbesondere in Verbindung mit Mähdreschern bezüglich der Zerkleinerung des Halmguts.

### LÖSUNG

Die Aufgabe der Erfindung wird erfindungsgemäß mit den Merkmalen des unabhängigen Patentanspruchs gelöst.

### BESCHREIBUNG DER ERFINDUNG

Die Erfindung geht von dem Gedanken aus, die Schlegelmesser jedes Schlegelmesserpaares durch einen Kraftspeicher vorzuspannen und zumindest in der Schneidposition durch den Kraftspeicher einerseits eine Tangentialkraft an jedem Schlegelmesser bereitzuhalten, die der aufzubringenden Schnittkraft gleichgerichtet ist, und andererseits den axialen Schenkel jedes Schlegelmessers durch einen Anschlag und einen Gegenanschlag in einem vorbestimmten Winkel mit zugeordnetem optimalen Anstellwinkel so anzustellen, dass der optimale Anstellwinkel über den gesamten Schneidvorgang zur Verfügung steht. Während die bisher im Stand der Technik übliche Anordnung eines Kraftspeichers für die Schlegelmesser dazu führt, dass diese sich nicht mehr exakt gemäß ihrer Schwerpunktanordnung radial ausrichten und damit in dieser ausgerichteten vorgespannten Stellung nur eine entsprechend der Massegestaltung festgelegte Tangentialkraft besitzen, wird nunmehr auch durch die Festlegung des vorbestimmten Winkels des radialen Schenkels in Verbindung mit dem zugeordneten optimalen Anstellwinkel des axialen Schenkels ein geringerer Leistungsbedarf möglich. Es wird also bereits aus der ausgerichteten festgelegten Stellung heraus eine sinnvoll einwirkende Tangentialkraft durch den Kraftspeicher zur Verfügung gestellt. Der Anstellwinkel wird damit festgelegt und ist auf einen kleineren Bereich beschränkt. Bei der neuen Vorrichtung ist eine der Schnittkraft gleichgerichtete Tangentialkraft von vornherein vorhanden, die als Schnittkraft genutzt wird. Die Größe der Tangentialkraft kann dabei so bemessen sein, dass sie die durchschnittlich benötigten Schnittkräfte aufzubringen in der Lage ist. Durch den Kraftspeicher und die von ihm bereitgestellte Tangentialkraft ist sichergestellt, dass ein optimaler Anstellwinkel über den gesamten Schneidvorgang zur Verfügung steht, d. h. vom Beginn des ersten Kontakts der Schneide des Schlegelmessers mit dem Halmgut bis zum Ende des Schnittes. Damit wird eine Gleitphase zwischen Schneide und Halmgut und die damit verursachte Reibung vermieden oder jedenfalls erheblich reduziert. Es erfolgt ein sofortiges Schneiden bei Kontaktaufnahme zum Schnittgut. Der Anstellwinkel der Schneiden verändert sich auch nicht über die Lebensdauer der Schlegelmesser, wenn die Schärfe der Schneiden abnimmt. Nur bei übermäßigem Schnittwiderstand kann ein geringfügiges Zurückschwenken der Schlegelmesser erfolgen, jedoch erst dann, wenn die vorgespannte Tangentialkraft vollständig aufgezehrt ist. Wenn der Kraftspeicher so bemessen ist, dass seine bereitgestellte Tangentialkraft mindestens dem Einfachen, vorzugsweise jedoch etwa dem 2- bis 3-Fachen der maximal zu erwartenden Schnittkraft entspricht, wird ein Zurückschwenken völlig vermieden. Dies schließt aber nicht aus, dass das Schlegelmesser beim Auftreffen auf Hindernisse, beispielsweise Steine, dennoch nach hinten entgegen der Drehrichtung ausweichen kann. Bei dem neuen Verfahren und der entsprechenden Vorrichtung stellt es einen bedeutsamen Vorteil dar, dass das System das Entstehen von Schwingungen vermeidet, die ihre Ursache in einer variablen unterschiedlichen Auslenkung der Schlegelmesser im Stand der Technik haben. Insbesondere werden Drehschwingungen der Welle vermieden, so dass die Lebensdauer von Passfedern oder sonstigen Maschinenelementen, die der Drehmomentübertragung dienen, erheblich gesteigert wird. Durch die Konstanz der Schnittbedingungen und dem sofortigen Beginn eines Schnittvorgangs unmittelbar nach Auftreten des Kontakts zwischen der Schneide und dem Halmgut tritt eine erhebliche Reduzierung des Leistungsbedarfs und auch eine Geräuschminderung auf. Erstaunlicherweise wird auch der Verschleiß an der Schneide der Schlegelmesser reduziert. Da die Schlegelmesser um ihre Aufhängung während der normalen Schnittarbeit keine Bewegung ausführen, wird auch die Reibung an der Aufhängung der Schlegelmesser reduziert, so dass sich eine erhöhte Lebensdauer ergibt. Da schädliche Rückwirkungen auf den Antrieb der Welle, insbesondere Drehschwingungen, vermieden werden, ist es vorteilhaft möglich, den Antrieb vergleichsweise kleiner zu dimensionieren und damit leichter zu gestalten. Die Leistungsabnahme von dem Antrieb ist wesentlich konstanter als im Stand der Technik. Es treten - abgesehen von dem Auftreffen auf Hindernisse - keine Kraftspitzen auf, so dass sich zusätzlich zu dem reduzierten Leistungsbedarf höhere Standzeiten und damit höhere Betriebszeiten ergeben.

Jedes Schlegelmesser in der Schneidposition wird durch die einwirkende Tangentialkraft des Kraftspeichers in einen vorbestimmten Winkel mit zugeordnetem Anstellwinkel gebracht. Die von dem Kraftspeicher zur Verfügung gestellte Tangentialkraft ist dabei so bemessen und angeordnet, dass sich die Schneide des Schlegelmessers oder die Schneiden des schlegelmesserpaars in eine festgelegte vorbestimmte Winkelstellung mit optimiertem Anstellwinkel bewegen, zumindest sobald die Schlegelmesser umlaufend angetrieben werden. Dies zielt darauf ab, im Bereich der Schneide einen zugeordneten Anstellwinkel zu verwirklichen und gesichert zur Einwirkung zu bringen, der auf einen sofortigen Schnitt bei Kontaktaufnahme zwischen Schneide und Halmgut abgestimmt ist.

Das Schlegelmesserpaar ist vorzugsweise in Y-Konfiguration angeordnet. Dies erbringt eine hinreichend große Überdeckung bzw. Abdeckung in Richtung der Arbeitsbreite, hält aber andererseits die Biegekräfte auf die Abbiegung zwischen dem radialen und dem axialen Schenkel der Schlegelmesser klein. Die axialen Schenkel der Schlegelmesser des Schlegelmesserpaares können einen sich in Richtung auf das freie Ende des Schenkels verjüngenden oder abnehmenden Querschnitt aufweisen. Die Schlegelmesser können auf plattenförmigen Grundkörpern durchgehender Dicke in einfacher Weise hergestellt werden. Durch die beschriebene Gestaltung mit dem abnehmenden Querschnitt wird zumindest die an der Vorderkante angeordnete Schneide in eine Schräglage gebracht, sodass hier vorteilhaft ein ziehender Schnitt verwirklicht wird. Die Schräglage entspricht dem abnehmenden Querschnitt. Die Abnehme des Querschnitts sollte insbesondere stetig ausgebildet sein, was nicht ausschließt, dass der Verlauf der Schneide nicht unbedingt gerade durchgehend ausgebildet sein muss, sondern auch gezahnt, gewellt oder sonst wie geformt sein kann.

Die Tangentialkraft des Kraftspeichers kann sinnvoll in Verbindung mit einem Anschlag am Schlegelmesser und einem Gegenanschlag an der Welle bzw. am Messerhalter gebildet werden. Durch einen solchen Anschlag in Verbindung mit einem Gegenanschlag wird eine Schneidposition festgelegt, bei der die durch den Kraftspeicher erzeugte Tangentialkraft dauerhaft und von Anfang an zur Verfügung steht und damit zu Schneidzwecken genutzt werden kann. Der optimale Anstellwinkel ist damit unveränderlich festgelegt. Der Anschlag und/oder der Gegenanschlag können verstellbar ausgebildet sein, um je nach Art des Halmguts einen bevorzugten Anstellwinkel einstellen zu können. Ein solcher verstellbarer Anschlag kann auch dazu genutzt werden, um den Anstellwinkel nachstellen zu können, wenn ein gewisser Verschleiß und eine gewisse Abrundung im Bereich der Schneiden eintritt. Im Allgemeinen sind solche verstellbaren Anschläge jedoch nicht erforderlich, weil es in erster Linie auf die Einhaltung eines definierten Anstellwinkels für den Schneidvorgang ankommt. Anschlag und Gegenanschlag können auch so gestaltet sein, dass eine Ausrastung dann möglich ist, wenn beispielsweise infolge Auftreffens auf ein Hindernis ein ungewöhnlich hoher Kraftanstieg zu verzeichnen ist, der außerhalb des Bereichs liegt, in dem sich überwiegend die zu erwartende Schnittkraft abspielt.

Die Tangentialkraft des Kraftspeichers kann durch verschiedene Maßnahmen festgelegt, bestimmt oder auch verändert werden. Eine solche Maßnahme besteht zunächst in der Anordnung der Masseverteilung am Schlegelmesser selbst. Hierzu wird der Umriss des Schlegelmessers, insbesondere im Bereich des Aufhänge- oder Befestigungsschenkels, durch eine entsprechende Umrissgestaltung so festgelegt, dass der Schwerpunkt des Schlegelmessers gegenüber der rein radialen Richtung in Drehrichtung nach hinten versetzt angeordnet ist. Eine zweite Möglichkeit, auf die Größe der Tangentialkraft bestimmend Einfluss zu nehmen, ist in der Anordnung von Zusatzmassen und deren örtlicher Platzierung an dem Schlegelmesser zu sehen. Solche Zusatzmassen können auch dann eingesetzt werden, wenn Schlegelmesser Anwendung finden, die zwei gegenüberliegend ausgebildete Schneiden aufweisen und daher gegeneinander austauschbar sind, um die Gebrauchsdauer zu verdoppeln. Schließlich ist es noch möglich, die Tangentialkraft des Kraftspeichers durch eine Federanordnung zu bestimmen oder jedenfalls mitzubestimmen. Es versteht sich, dass alle diese Möglichkeiten der Einflussnahme auch in Kombination miteinander anwendbar sind.

Die Tangentialkraft des Kraftspeichers sollte mindestens so groß bemessen sein, wie dies der durchschnittlich zu erreichenden Schnittkraft entspricht. Sinnvoller ist es, wenn die Tangentialkraft des Kraftspeichers mindestens so groß bemessen ist wie die maximal zu erreichende Schnittkraft. Es ist aber auch möglich, die Tangentialkraft des Kraftspeichers noch weiter zu erhöhen, so dass sie dem Mehrfachen der durchschnittlich zu erwartenden Schnittkraft entspricht. All diese Maßnahmen dienen in verstärktem Maße dazu, den vorbestimmten sinnvollen optimalen Anstellwinkel der Schneiden zu erreichen und auch dann beizubehalten, wenn ein gewisser Verschleiß an den Schneiden der Schlegelmesser eintritt.

Die Vorrichtung zum Abschneiden und Zerschneiden von Schnittgut kann auf einzelne Schlegelmesser oder auch auf Schlegelmesserpaare angewendet und abgestimmt werden. Für jedes Schlegelmesser oder Schlegelmesserpaar ist ein Kraftspeicher vorgesehen, der zumindest in Schneidposition eine Tangentialkraft zur Verfügung stellt, die der von dem Schlegelmesser aufzubringenden Schnittkraft gleichgerichtet ist und die ein kraftarmes Schneiden bewirkt. Die Schneidposition kann von vornherein festgelegt sein, also von dem Schlegelmesser oder Schlegelmesserpaar auch dann eingenommen werden, wenn die angetriebene Welle stillsteht. Es gibt aber auch Ausführungsmöglichkeiten, bei denen die Schneidposition erst dann eintritt, wenn die Welle umlaufend angetrieben wird und die Fliehkraft zur Einwirkung gebracht wird. Jedes Schlegelmesser wird in der Schneidposition durch die einwirkende Tangentialkraft des Kraftspeichers in einen vorbestimmten Winkel mit zugeordnetem Anstellwinkel angestellt. Um eine solche Stellung zu sichern und bereitzuhalten, ist am Schlegelmesser oder am Schlegelmesserpaar ein Anschlag und an der Welle bzw. am Messerhalter ein Gegenanschlag vorgesehen, die entsprechend zusammenwirken. Der Anschlag bzw. der Gegenanschlag kann fest, einstellbar und/oder ausrastbar ausgebildet sein. Für die Erzeugung der Tangentialkraft des Kraftspeichers gibt es verschiedene Möglichkeiten. In erster Linie kommt eine gestaltete Masseverteilung in Frage, mit der ein entgegen der Drehrichtung der Welle nach hinten verlagerte Schwerpunktsausbildung und Anordnung angestrebt wird. Dies kann durch die Umrissgestaltung des Schlegelmessers selbst und/oder durch anbringbare Zusatzmassen erreicht werden. Schließlich kann auch die Anordnung einer oder mehrerer Federn dazu genutzt werden, um die Tangentialkraft bestimmend festzulegen. Die aufgezeigten Maßnahmen können auch in Kombination zueinander eingesetzt werden.

Die Anwendung der Erfindung ist von der Form der Schlegelmesser an sich unabhängig. Sie kann insbesondere auf Schlegelmesser oder auf Schlegelmesserpaare angewendet werden. Die Schlegelmesser können, wie bisher bekannt, Y-Form bzw. Anwendung aufweisen. Mit besonderem Vorteil wird die Erfindung jedoch auf L-förmige Schlegelmesser angewendet, die eine vergleichsweise größere Überdeckung in Arbeitsbreite aufweisen, wodurch zusätzlich die wirksame Projektionsfläche der Schlegelmesser verringert wird. Auch durch diese Maßnahme wird der Leistungsbedarf reduziert. Auch wird das Gewicht der Schlegelmesser pro Einheit Arbeitsbreite reduziert.

Vorteilhafte Weiterbildungen der Erfindung ergeben sich also aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Schnittansicht gemäß der Schnittangabe I-I in Fig. 3 von zwei in Y-Form aufgehängten Schlegelmessern.
- **Fig. 2**: zeigt eine Draufsicht auf die Schlegelmesser gemäß Fig. 1.
- **Fig. 3**: zeigt eine zugehörige Seitenansicht auf das Schlegelmesserpaar, teilweise geschnitten.
- **Fig. 4**: zeigt eine Vorderansicht auf ein Schlegelmesserpaar in L-Form.
- **Fig. 5**: zeigt die Draufsicht auf die Schlegelmesser gemäß Fig. 4 in radialer Richtung.
- **Fig. 6**: zeigt eine zu den Fig. 4 und 5 gehörende Seitenansicht, teilweise geschnitten gemäß der Linie VI - VI in Fig.4.
- **Fig. 7**: zeigt eine Seitenansicht einer weiteren Ausführungsform der Aufhängung von Schlegelmessern.
- **Fig. 8**: zeigt eine weitere Ausführungsform auf die Aufhängung eines einzelnen Schlegelmessers.
- **Fig. 9**: zeigt eine Vorderansicht des Schlegelmessers gemäß Fig. 8.
- **Fig. 10**: zeigt eine Seitenansicht einer weiteren Ausführungsform der Aufhängung eines einzelnen Schlegelmessers oder eines Schlegelmesserpaars.
- **Fig. 11**: zeigt schließlich eine letzte Ausführungsform für die Aufhängung eines Schlegelmesserpaars in Seitenansicht.

### FIGURENBESCHREIBUNG

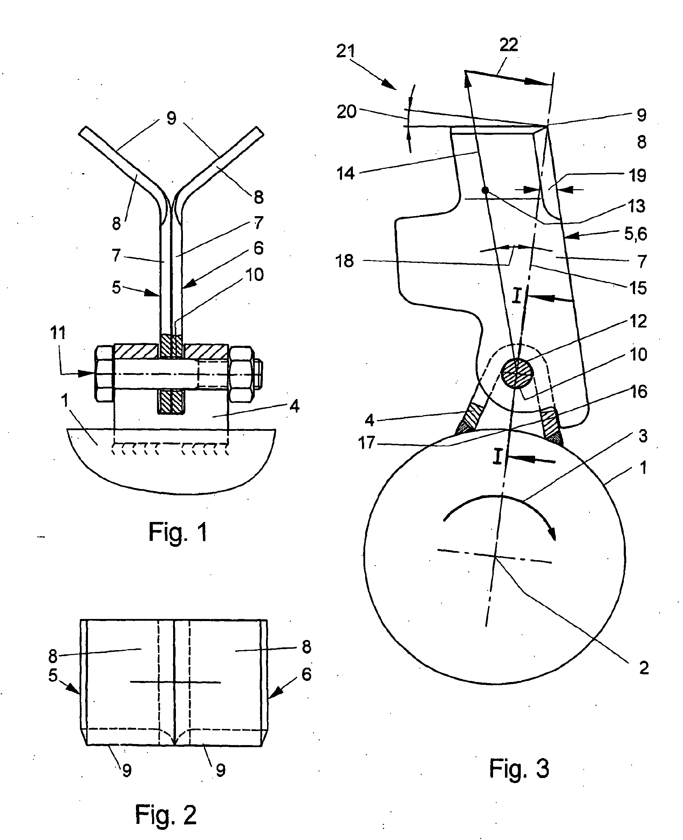

**Fig. 1** zeigt als wesentlichen Bestandteil eines Schlegelmähwerks eine Welle 1 (ausschnittsweise), die um eine Drehachse 2 (Fig. 3) in Drehrichtung 3 umlaufend angetrieben wird. Auf der Welle 1 sind über die Arbeitsbreite reichend in entsprechenden Abständen Messerhalter 4 angeordnet, die der frei beweglich pendelnden Aufhängung je eines Schlegelmessers 5 dienen. In Fig. 1 ist an jeder Aufhängungsstelle, d. h. im Bereich jedes Messerhalters 4, ein Paar von Schlegelmessern 5, 6 frei beweglich pendelnd aufgehängt. Jedes Schlegelmesser 5, 6 weist einen sich im Wesentlichen radial zu der Drehachse 2 erstreckenden Schenkel 7 und einen mehr oder weniger abgewinkelten, in etwa axial verlaufenden Schenkel 8 auf. Die Schenkel 7 werden auch als Befestigungs- oder Aufhängeschenkel bezeichnet. Die Schenkel 8 werden auch als Schneidschenkel bezeichnet. Fig. 1 lässt erkennen, dass die beiden Schlegelmesser 5 und 6 sich zu einem Schlegelmesserpaar 5, 6 ergänzen und in einer Y-Konfiguration gestaltet und aufgehängt sind, wobei der Winkel zwischen den beiden Schenkeln 8 wesentlich kleiner als 180° gestaltet ist. Insbesondere aus den Fig. 2 und 3 ist erkennbar, dass die Schenkel 8, teilweise auch noch übergehend in den Bereich der Schenkel 7 Schneiden 9 tragen, die, wie aus Fig. 3 erkennbar ist, in Drehrichtung 3 vorne liegend vorgesehen sind. Im Schenkel 7 jedes Schlegelmessers 5, 6 ist eine Durchbrechung 10 vorgesehen, die von einem Bolzen oder einer Schraube 11 durchsetzt wird, so dass auf diese Weise eine Aufhängung für die Schlegelmesser 5, 6 gebildet ist, die um eine Achse 12 der Schraube 11 an dem Messerhalter 4 frei pendelnd aufgehängt sind.

Die Schlegelmesser 5 und 6 sind relativ zu ihrer gemeinsamen Berührungsebene symmetrisch ausgebildet. **Fig. 3** lässt erkennen, dass die Schlegelmesser 5, 6 insbesondere im Bereich der Schenkel 7 eine besondere Umrissgestaltung aufweisen. Die Umrissgestaltung ist so ausgebildet, dass jedes Schlegelmesser 5 und 6 einen Schwerpunkt 13 bekommt, der entgegen der Drehrichtung 3 nach hinten versetzt angeordnet ist. Der Schwerpunkt 13 liegt auf einer Linie 14, die sich radial zu der Achse 12 der Schraube 11 erstreckt. Eine weitere Linie 15 verbindet die Drehachse 2 mit der Achse 12 und zeigt damit die genau radiale Richtung an, in der sich ein frei pendelnd und ohne jegliche Begrenzung aufgehängtes Schlegelmesser 5 und 6 bei angetriebener Welle 1 und einwirkender Fliehkraft ausrichten würde.

Damit der Schwerpunkt 13 sich nicht in der Linie 15 anordnet, ist am Schlegelmesser 5 und 6 ein Anschlag 16 und am Messerhalter 4 bzw. an der Welle 1 ein Gegenanschlag 17 ausgebildet. Der Anschlag 16 und der Gegenanschlag 17 sind hier ortsfest gestaltet und ausgebildet und wirken so zusammen, dass sich die Schlegelmesser 5, 6 bei angetriebener Welle in der aus Fig. 3 erkennbaren Relativlage ausrichten. Die Schlegelmesser 5, 6 nehmen dabei eine durch den Winkel 18 zwischen den Linien 14 und 15 festgelegte Winkelstellung ein, wodurch gleichzeitig zwischen der Vorderkante des Schenkels 7 und Linie 15 ein Winkel 19 festgelegt wird. Durch die Gestaltung der Schlegelmesser 5, 6 in Verbindung mit der Ausbildung und Anordnung des Anschlages 16 und des Gegenanschlages 17 ergibt sich ein Anstellwinkel 20.

Dieser Anstellwinkel 20 ist bestimmend dafür, in welcher Relativlage die Schneide 9 während des Schnittes mit dem Halmgut in Kontakt kommt.

Durch diese besondere Ausbildung und Anordnung wird im Zusammenspiel mit dem Anschlag 16 und dem Gegenanschlag 17 ein Kraftspeicher 21 gebildet, der eine Tangentialkraft 22 bereitstellt, deren Größe durch die Masse und den Schwerpunkt 13 sowie die Drehzahl der Welle 1 bestimmt wird. Die Tangentialkraft 22 ist in der aus Fig. 3 ersichtlichen Richtung gerichtet und wird als Schnittkraft eingesetzt, die der vom Halmgut aufgebrachten Reaktionskraft, wie sie zum Schneiden benötigt wird, entgegengerichtet ist. Die Tangentialkraft 22 ist dann, wenn eine konstante Drehzahl der Welle 1 erreicht ist und der Anschlag 16 am Gegenanschlag 17 anliegt, konstant. Ihre Größe ist so bemessen, dass mindestens eine durchschnittlich in Erwartung stehende Reaktionskraft am Halmgut aufgebracht bzw. ausgeglichen werden kann. Wenn die Tangentialkraft 22 durch Verlagerung des Schwerpunktes infolge Umrissänderung des Schenkels 7 so bemessen ist, dass sie der maximal zu erwartenden Schnittkraft bzw. Reaktionskraft entspricht, besteht während des Schneidvorgangs keine Veranlassung, dass sich der Anschlag 16 von dem Gegenanschlag 17 löst. Zur Sicherheit kann die Tangentialkraft 22 so groß bemessen sein, dass sie einem Mehrfachen der Schnittkraft bzw. Reaktionskraft entspricht.

**Fig. 1 und 2** lassen erkennen, dass die beiden Schlegelmesser 5, 6 spiegelsymmetrisch ausgebildet sind. Es ist nur im Bereich einer Kante je eine Schneide vorgesehen. Die Schlegelmesser 5, 6 sind damit gegeneinander nicht austauschbar, sondern es gibt rechte und linke Schlegelmesser.

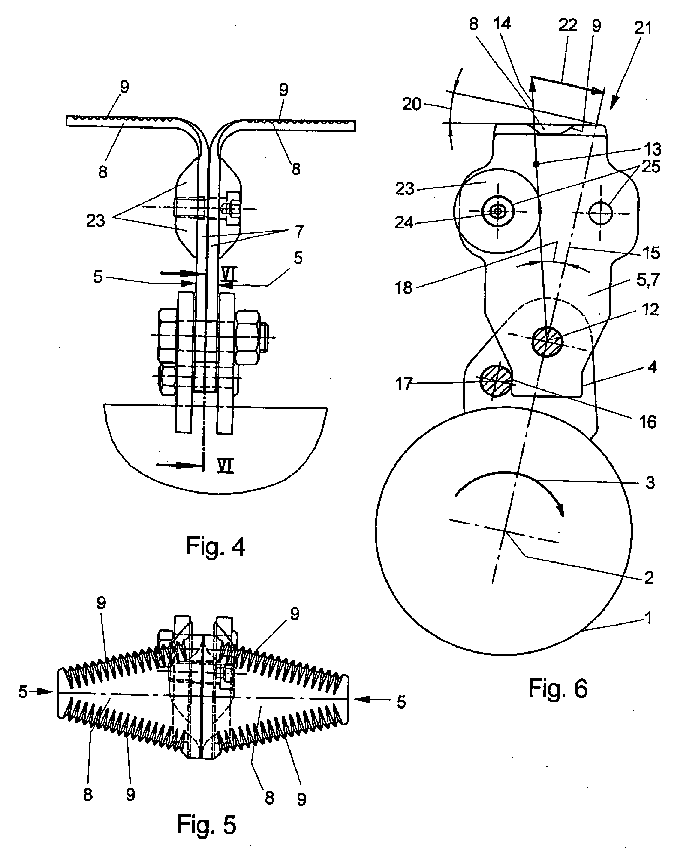

Eine weitere Ausführungsform ist in den **Fig. 4 bis 6** dargestellt. Es sind hier zwei identisch ausgebildete Schlegelmesser 5 zu einem Schlegelmesserpaar zusammengefasst. Jedes Schlegelmesser 5 weist eine L-förmige Gestalt auf, wobei die Schenkel 8 gegenüber den Schenkeln 7 in einem etwa rechten Winkel mit entsprechender Umbiegung (Fig. 4) abgebogen sind. Insoweit sind auf beiden Seiten der Schenkel 8 Schneiden 9 vorgesehen, die, wie in Fig. 5 dargestellt, gezahnt ausgebildet sein können. Fig. 6 lässt erkennen, dass die Umrissgestaltung der Schenkel 7 symmetrisch durchgeführt ist, um die Schlegelmesser 5 in den beiden Relativlagen aufhängen zu können und dabei jeweils die verschiedenen Schneiden 9 zu nutzen. Die relativ zur Drehrichtung 3 vorgenommene Zurückverlagerung des Schwerpunkts 13 wird hier durch ein oder mehrere Zusatzgewichte 23 erreicht, die mit Hilfe einer Schraube 24 in wahlweise nutzbaren Durchbrechungen 25 je nach Drehrichtung angeordnet werden. Auch damit ist es möglich, einen Kraftspeicher 21 mit entsprechender Tangentialkraft 22 zu bilden. Auch hierbei wird ein Anschlag 16 und ein Gegenanschlag 17 eingesetzt, die in einer zweiten Anordnungsmöglichkeit relativ zur Achse 12 vorgesehen sind. Darüber hinaus ist eine Verstellbarkeit zwischen Anschlag 16 und Gegenanschlag 17 vorgesehen. Zu diesem Zweck besitzt der als Bolzen ausgebildete Gegenanschlag 17 auf seinem Umfang verschieden tief gestaltete Abschrägungen 26, die wahlweise dem Anschlag 16 gegenüberliegend eingestellt und in der eingestellten Stellung gesichert werden können, so dass sich hierdurch unterschiedliche Anstellwinkel 20 verwirklichen lassen.

Bei einer Vielzahl der Ausführungsformen, so auch bei der Ausführungsform der Fig. 4 bis 6, wird durch Schwerpunktsfestlegung und/ oder Zusatzgewichte 23 und/oder eine Federanordnung ein gefesselter Kraftspeicher 21 geschaffen. Die gefesselte Tangentialkraft 22 ist im Kraftspeicher gespeichert und kommt erst dann zur Auswirkung, wenn bei Kontakt mit dem Schnittgut eine Schnittkraft aufgebracht werden muss. Die gefesselte Tangentialkraft 22 bildet oder bewirkt die Schnittkraft.

Gemäß Fig. 3 wird die Verlagerung des Schwerpunkts 13 nach hinten durch eine Masseverteilung im Bereich der Schlegelmesser 5, 6, also insbesondere im Bereich der Schenkel 7, erreicht, die ohnehin einen relativ geringen Widerstand bei ihrem Umlauf erzeugen. Aber auch die Gegengewichte 23 können abgerundet und abgeflacht ausgebildet sein, um den Widerstand möglichst wenig zu erhöhen. Es versteht sich, dass auch beide Maßnahmen zur Realisierung des Kraftspeichers 21 kombiniert angewendet werden können, also sowohl eine Umrissgestaltung im Bereich der Schenkel 7, wie auch die Anordnung von Zusatzgewichten 23. In einem solchen Fall wird auf die gewendete Anordnungsmöglichkeit verzichtet, d. h. es ergeben sich rechte und linke Schlegelmesser 5 und 6. Es versteht sich weiterhin, dass verstellbare und einstellbare Anschläge 16 in Verbindung mit dem Gegenanschlag 17 auch auf andere Weise, als in Fig. 6 dargestellt, realisiert werden können.

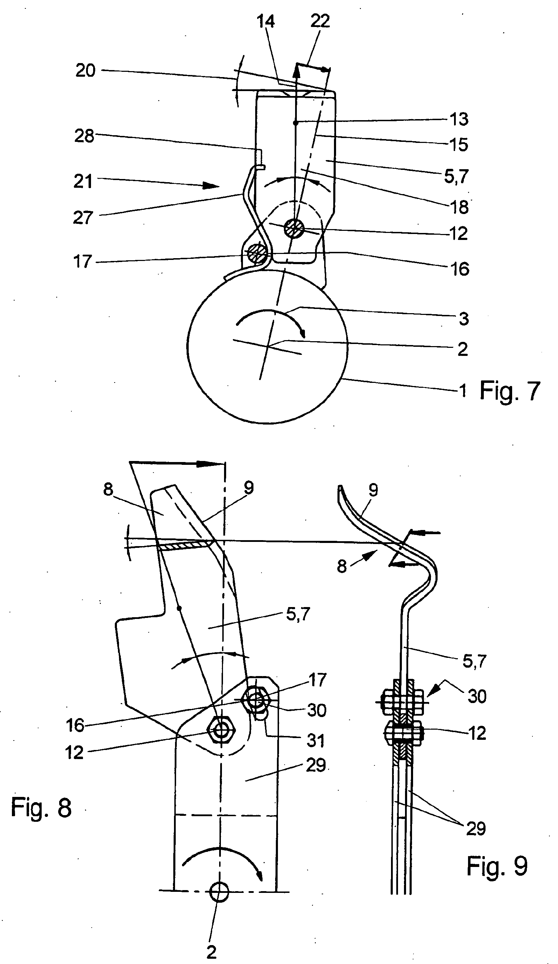

**Fig. 7** zeigt eine weitere, nicht vom Wortlaut der Patentansprüche umfasste Ausführungsform für identisch ausgebildete Schlegelmesser 5, die zu zweien zu einem Schlegelmesserpaar 5, 5 zusammengefasst sind. Die Darstellung der Fig. 7 kann auch als zu den Fig. 4 und 5 gehörig angesehen werden, mit Ausnahme der Anordnung des Zusatzgewichts 23. Die Umrissgestaltung der Schlegelmesser 5, insbesondere im Bereich der Schenkel 7, ist so dargestellt, dass sich hierdurch keine Relatiwerlagerung des Schwerpunkts 13 ergibt. Fig. 7 dient dazu, deutlich zu machen, dass der Kraftspeicher 21 allein von einer Federanordnung 27 gebildet werden kann. Es kann hier eine einzelne Feder oder auch zwei Federn in symmetrischer Anordnung vorgesehen sein. Weitere Gestaltungsmöglichkeiten der Federanordnung 27 sind ohne weiteres denkbar. Die Federanordnung 27 spannt hier die Schlegelmesser 5 so vor, dass die aus Fig. 7 ersichtliche Relativlage erreicht wird, bei der der Anschlag 16 an dem Gegenanschlag 17 anliegt. Bei Anwendung einer einzelnen Feder kann diese ein freies Ende 28 aufweisen, welches die Schenkel 7 der Schlegelmesser 5 bügel- oder bogenartig umfasst. Es ist aber auch möglich, das freie Ende 28 so schräg zu stellen bzw. auszurichten, dass die Federanordnung 27 bei Auftreffen der Schlegelmesser 5 auf ein festes Hindernis ausrastet und eine Rückwärtsverschwenkung der Schlegelmesser 5 entgegen der Drehrichtung 3 ohne weiteres zulässt. Dies bedeutet, dass in einem solchen Fall die zum Schneiden erforderliche Anstellwinkel 20 durch Einhaken der Federanordnung 27 erst wieder hergestellt werden muss, bevor die weitere Schneidarbeit durchgeführt werden kann.

Obwohl in Fig. 7 eine Ausführungsform dargestellt ist, bei der der gefesselte Kraftspeicher 21 allein durch die Federanordnung 27 gebildet wird, so dass auch hier eine entsprechend vorgespannte Tangentialkraft 22 erzeugt wird, ist ohne weiteres vorstellbar, dass eine solche Federanordnung 27 auch in Verbindung mit einer Masseausbildung der Schenkel 7, wie in Fig. 3 dargestellt, und/oder mit der Anordnung von Zusatzgewichten 23 (Fig. 6) eingesetzt werden kann. Durch die verschiedenen aufgezeigten Maßnahmen wird letztlich der Kraftspeicher 21 mit der festgelegten Tangentialkraft 22 realisiert.

**Fig. 8** zeigt eine nicht vom Wortlaut der Patentansprüche umfasste Ausführungsform, bei der an einer Aufhängestelle nur ein einzelnes Schlegelmesser 5 aufgehängt ist. Das Schlegelmesser 5 ist im Bereich seiner Schneide 9, wie insbesondere aus Fig. 9 hervorgeht, mehrfach abgewinkelt und an Armen 29 frei pendelnd um eine Achse 12 aufgehängt. Diese Konstruktion eignet sich bevorzugt für Schlegelmähwerke mit vertikal ausgerichteter Drehachse 2. Der Anschlag 16 wird hier von der Vorderkante des Schenkels 7 gebildet, während der Gegenanschlag 17 verstellbar ausgebildet ist. Der Gegenanschlag 17 wird von einer Schraube 30 gebildet, die in einem schräg gestellt angeordneten Langloch 31 in dem Arm 29 in verschiedenen Stellungen festgezogen werden kann, wodurch auf diese Weise der Anstellwinkel 20 verändert werden kann.

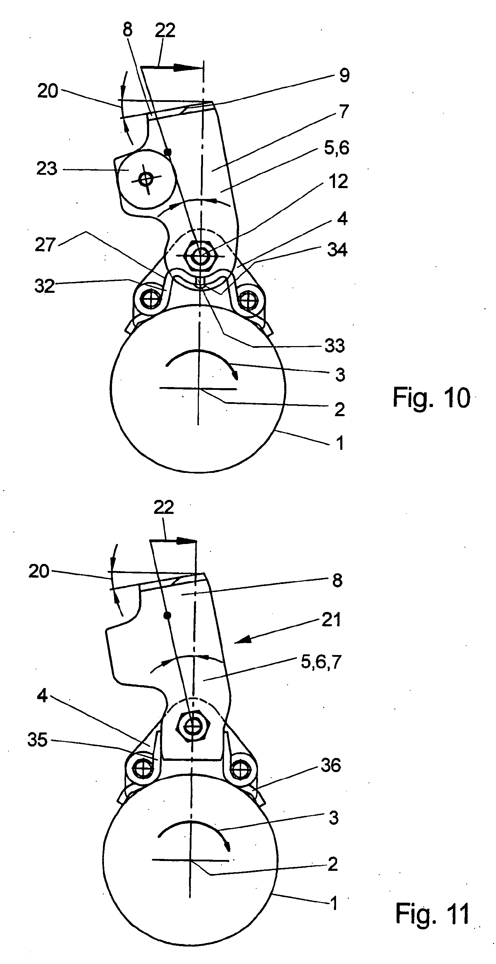

**Fig. 10** zeigt eine weitere Ausführungsmöglichkeit für Schlegelmesser 5, 6, die spiegelsymmetrisch zueinander ausgebildet sind. Die Schenkel 8 sind L-förmig gegenüber den Schenkeln 7 abgewinkelt. An den Schenkeln 8 ist jedoch nur auf einer Seite eine Schneide 9 vorgesehen. Die Masseanordnung ist hier nicht nur durch die Gestalt der Schenkel 7 beeinflusst, sondern zusätzlich auch noch durch die Anordnung von Zusatzgewichten 23. Zusätzlich wird hier der Kraftspeicher 21 mit seiner Tangentialkraft 22 auch noch von der Federanordnung 27 mitbestimmt. Hier wird ein- oder beidseitig zu den Schenkeln 7 der Schlegelmesser 5, 6 je eine in der aus Fig. 10 erkennbaren Weise gebogenen Feder 32 gebildet, die in Verbindung mit den Schenkeln 7 der Schlegelmesser 5 und 6 auch die Funktion des Anschlags 16 und des Gegenanschlags 17 übernimmt. Zu diesem Zweck weist die Feder 32 oder die beiden Federn 32 in ihrem Mittelbereich eine bogenförmige seitliche Abwinkelung 33 auf, die in ein Loch 34 eingreift, welches in dem Schenkel 7 in einfacher oder doppelter Ausfertigung vorgesehen ist. Damit wirkt sich auch die Vorspannkraft der Federanordnung 27 auf den Kraftspeicher 21 mit der Tangentialkraft 22 aus. Die besondere Gestaltung der Feder 32 der Federanordnung 27 erbringt darüber hinaus den Vorteil, dass der Anschlag 16 gegenüber dem Gegenanschlag 17 ausrasten kann, indem bei entsprechender Überlast infolge Auftreffens auf ein Hindernis die Abwinkelung 33 aus dem Loch 34 heraustritt. Insoweit kann sich jedes Schlegelmesser 5, 6 entgegen der Drehrichtung 3 in einem solchen Fall verdrehen. Diese Ausbildung hat den weiteren Vorteil, dass eine automatische Wiedereinstellung des Anstellwinkels 20 des Kraftspeichers 21 durch Fliehkrafteinwirkung auf die Schlegelmesser 5, 6 eintritt, indem die seitliche Abwinkelung 33 in das Loch 34 wieder eintritt.

**Fig. 11** zeigt schließlich eine Ausführungsform, bei der der Kraftspeicher 21 mit der Tangentialkraft 22 durch eine entsprechende Umrissgestaltung der Schenkel 7 der Schlegelmesser 5 und 6 einerseits und durch die Federanordnung 27 in Form zweier Schenkelfedern 35 und 36 bestimmt wird. Die beiden Schenkelfedern 35 und 36 beaufschlagen die dargestellte Stellung und halten die Schlegelmesser 5, 6 auch in der nicht angetriebenen Stellung der Welle 1 in der aus Fig. 11 ersichtlichen Relativlage, so dass auch hier der Anstellwinkel 20 eingestellt gehalten wird. Die Schenkelfedern 35 und 36 erfüllen auch hier die Funktion von Anschlag 16 und Gegenanschlag 17. Beim Antrieb der Welle 1 tritt dann der Anteil, der durch die Massenverteilung der Schenkel 7 bewirkt wird, hinzu und vergrößert die Tangentialkraft 22 entsprechend. Die Schenkelfedern 35 und 36 können so ausgelegt sein, dass sie eine Verschwenkung bei Auftreffen auf ein Hindernis zulassen und die Schlegelmesser 5, 6 danach in die Ausgangsstellung zurückführen.

### BEZUGSZEICHENLISTE

- 1: Welle
- 2: Drehachse
- 3: Drehrichtung
- 4: Messerhalter
- 5: Schlegelmesser
- 6: Schlegelmesser
- 7: Schenkel
- 8: Schenkel
- 9: Schneide
- 10: Durchbrechung

- 11: Schraube
- 12: Achse
- 13: Schwerpunkt
- 14: Linie
- 15: Linie
- 16: Anschlag
- 17: Gegenanschlag
- 18: Winkel
- 19: Winkel
- 20: Anstellwinkel

- 21: Kraftspeicher
- 22: Tangentialkraft
- 23: Zusatzgewicht
- 24: Schraube
- 25: Durchbrechung
- 26: Abschrägung
- 27: Federanordnung
- 28: Ende
- 29: Arm
- 30: Schraube

- 31: Langloch
- 32: Feder
- 33: Abwinklung
- 34: Loch
- 35: Schenkelfeder
- 36: Schenkelfeder

## Patentansprüche

1. Vorrichtung zum Abschneiden und Zerschneiden von insbesondere hoch wachsendem Schnittgut, mit einer umlaufend angetriebenen Welle (1) und mit einem in einem Messerhalter (4) an der Welle (1) beweglich aufgehängten Schlegelmesserpaar (5 und 6), bei dem sich zwei Schlegelmesser (5, 6) mit je einem radialen Schenkel (7), die mit gemeinsamer Berührebene aneinander anliegen, und je einem axialen Schenkel (8) bei angetriebener Welle (1) unter Fliehkrafteinwirkung ausrichten und mit denen das Schnittgut abgeschnitten und zerschnitten wird, wobei für das Schlegelmesserpaar (5 und 6) durch eine Masseverteilung mit entgegen der Drehrichtung (3) der Welle (1) nach hinten verlagerter Schwerpunktausbildung in Verbindung mit einem Anschlag (16) am Schlegelmesserpaar (5 und 6) und einem Gegenanschlag (17) an der Welle (1) bzw. am Messerhalter (4) ein Kraftspeicher (21) ausgebildet ist und das Schlegelmesserpaar (5 und 6) durch Anschlag (16) und Gegenanschlag (17) in einem vorbestimmten Winkel (18) mit zugeordnetem optimalem Anstellwinkel (20) der axialen Schenkel (8) so angestellt ist, dass einerseits zumindest in Schneidposition eine Tangentialkraft (22) zur Verfügung steht, die der von den Schlegelmessern (5, 6) aufzubringenden Schnittkraft gleichgerichtet ist und die ein kraftarmes Schneiden bewirkt, und andererseits der optimale Anstellwinkel (20) über den gesamten Schneidvorgang zur Verfügung steht.

2. Vorrichtung nach Anspruch 1, **dadurch gekennzeichnet, dass** das Schlegelmesserpaar (5 und 6) in Y-Konfiguration angeordnet ist.

3. Vorrichtung nach Anspruch 1 oder 2, **dadurch gekennzeichnet, dass** die axialen Schenkel (8) der Schlegelmesser (5, 6) des Schlegelmesserpaares (5 und 6) einen sich in Richtung auf das freie Ende des Schenkels (8) verjüngenden Querschnitt aufweisen.

4. Vorrichtung nach mindestens einem der Ansprüche 1 bis 3, **dadurch gekennzeichnet, dass** die axialen Schenkel (8) gezahnt ausgebildete Schneiden (9) aufweisen.

5. Vorrichtung nach mindestens einem der Ansprüche 1, 3 oder 4, **dadurch gekennzeichnet, dass** die Schlegelmesser (5, 6) des Schlegelmesserpaares (5 und 6) mit den radialen und axialen Schenkeln (7, 8) L-förmig ausgebildet sind.

6. Vorrichtung nach mindestens einem der Ansprüche 1 bis 5, **dadurch gekennzeichnet, dass** an der Welle (1) in Messerhaltern (4) eine Mehrzahl von Schlegelmesserpaaren (5 und 6) beweglich aufgehängt sind und dass für jedes der Schlegelmesserpaare (5 und 6) ein Kraftspeicher (21) vorgesehen ist.

## Claims

1. An apparatus for cutting and slicing especially high growing material, comprising a shaft(1), the shaft being designed and arranged to be driven to rotate, a pair (5 and 6) of flail knives (5, 6) each having a radial leg (7) and an axial leg (8), the pair of flail knives being connected to a knife carrier (4) in a movable way that the radial legs (7) by centrifugal force contact each other in a common plane and the flail knives are located in a cutting position during rotation of the shaft (1) cutting and slicing the material, the pair (5 and 6) of flail knives being designed and arranged to form an energy storing device (21) by an arrangement of the mass in which the centre of gravity of the flail knives is dislocated in a direction against the direction (3) of rotation of the shaft (1) in connection with a stop element (16) being located at the pair (5 and 6) of flail knives and a counter stop element (17) being located at the shaft (1) or at the knife carrier (4) respectively, the pair (5 and 6) of flail knifes being designed and arranged such that the flail knives in the cutting position are maintained at a predefined angle (18) with a coordinated optimal angle (20) of inclination of the axial legs (8) to produce on the one hand at least in the cutting position a tangential force (22) being directed in the same direction as the required cutting force of the flail knives (5, 6) and allowing a cutting with reduced force and on the other hand providing the optimal angle (20) of inclination during the whole cutting procedure.

2. The apparatus of claim 1, **characterized in that** the pair (5 and 6) of flail knives is arranged in Y-configuration.

3. The apparatus of claim 1 or 2, **characterized in that** the axial legs (8) of the pair (5 and 6) of the flail knives (5, 6) have a decreasing cross section each in the direction towards the free end of the leg (8).

4. The apparatus of one of the claims 1 to 3, **characterized in that** the axial legs (8) comprise toothed cutting portions (9).

5. The apparatus of at least one of the claims 1, 3 or 4, **characterized in that** the flail knives (5, 6) of the pair (5 and 6) of flail knives have the shape of an "L" including the radial leg (7) and the axial leg (8).

6. The apparatus of at least on of the claims 1 to 5, **characterized in that** a plurality of pairs (5 and 6) of flail knives is arranged at knife carriers (4) in a movable way and **in that** an energy storing device (21) is allocated to each pair (5 and 6) of flail knives.

## Revendications

1. Appareil pour couper et broyer en particulier des matières à couper hautes, avec un arbre (1) entraîné en rotation et avec une paire de couteaux de débroussailleuse (5, 6) suspendue de manière mobile dans un porte-lame (4) sur l'arbre (1), dans lequel les deux couteaux de débroussailleuse (5, 6), avec chacun une branche radiale (7) qui s'applique l'une contre l'autre avec une plage de contact commune, et avec chacun une branche axiale (8), s'alignent sous l'effet de la force centrifuge lorsque l'arbre (1) est entraîné, et à l'aide desquels les matières à couper sont coupées et broyées, dans lequel un accumulateur de force (21) pour la paire de couteaux de débroussailleuse (5 et 6) est réalisé par une répartition de la masse, avec la formation d'un centre de gravité déporté vers l'arrière, dans le sens opposé au sens de rotation (3) de l'arbre (1), en association avec une butée (16) sur la paire de couteaux de débroussailleuse (5 et 6) et une contre-butée (17) sur l'arbre (1) ou le porte-lame (4), et dans lequel la paire de couteaux de débroussailleuse (5 et 6) est disposée grâce à la butée (16) et à la contre-butée (17), dans un angle prédéfini (18), en relation avec un angle d'incidence optimal (20) des branches axiales (8), de sorte que d'une part, dans au moins une position de coupe, est disponible une force tangentielle (22), orientée de la même façon que celle de la force de coupe à exercer par les couteaux de débroussailleuse (5, 6) et assurant une coupe avec une faible force, et que d'autre part, l'angle d'incidence optimal (20) est maintenu sur l'ensemble de l'opération de coupe.

2. Appareil selon la revendication 1, **caractérisé en ce que** la paire de couteaux de débroussailleuse (5 et 6) présente une configuration en Y.

3. Appareil selon les revendications 1 ou 2, **caractérisé en ce que** les branches axiales (8) des couteaux de débroussailleuse (5, 6) de la paire de couteaux de débroussailleuse (5 et 6) comportent une section se rétrécissant en direction de l'extrémité libre de la branche (8).

4. Appareil selon les revendications 1 à 3, **caractérisé en ce que** les branches axiales (8) présentent une arête (9) conçue dentée.

5. Appareil selon les revendications 1, 3 ou 4, **caractérisé en ce que** les couteaux de débroussailleuse (5, 6) de la paire de couteaux de débroussailleuse (5 et 6) sont disposés en L avec les branches radiales et axiales (7, 8).

6. Appareil selon les revendications 1 à 5, **caractérisé en ce que** plusieurs paires de couteaux de débroussailleuse (5 et 6) sont suspendues de manière mobile sur l'arbre (1) dans des porte-lames (4) et **en ce que** pour chaque paire de couteaux de débroussailleuse (5 et 6) est prévu un accumulateur de force (21).
